# EUROPÄISCHE PATENTANMELDUNG

(11) **EP 4 524 910 A1**
(43) Veröffentlichungstag der Anmeldung: **19.03.2025**
(21) Anmeldenummer: 24196126.7
(22) Anmeldetag: 23.08.2024
(51) Int. Cl.: G06V 20/56, G06T 7/80

(54) **VERFAHREN UND VORRICHTUNG ZUR ERFASSUNG EINES BILDES IM AUSSENRAUM EINES KRAFTFAHRZEUGS SOWIE KRAFTFAHRZEUG**

(30) Priorität: 12.09.2023 DE 102023208845
(71) Anmelder: Continental Automotive Technologies GmbH, 30175 Hannover (DE)
(72) Erfinder: Smits, Thomas, 30175 Hannover (DE)
(74) Vertreter: Continental Corporation

(57) **Zusammenfassung**

Die Erfindung betrifft ein Verfahren (100) und eine Vorrichtung (1000) zur Erfassung eines Bildes im Außenraum eines Kraftfahrzeugs (10) sowie ein Kraftfahrzeug (10) mit einer solchen Vorrichtung (1000).

Die Erfindung sieht vor, dass das Verfahren (100) die folgenden Schritte umfasst: Erfassen eines Bildes im Außenraum eines Kraftfahrzeugs (10) mithilfe einer Kameraeinrichtung (40), wobei das erfasste Bild aufgrund der Art der Kameraeinrichtung (40) verzerrt ist, Erfassen einer Eigenschaft der Kameraeinrichtung (40), Entzerren des Bildes basierend auf der Eigenschaft der Kameraeinrichtung (40), Überprüfen des entzerrten Bildes basierend auf der Eigenschaft der Kameraeinrichtung, und Bereitstellen des entzerrten Bildes an einen Nutzer des Kraftfahrzeugs (10).

## Beschreibung

Die Erfindung betrifft ein Verfahren und eine Vorrichtung zur Erfassung eines Bildes im Außenraum eines Kraftfahrzeugs sowie ein Kraftfahrzeug mit einer solchen Vorrichtung.

Kraftfahrzeuge mit unübersichtlichen Anbauteilen, die in den Fahrweg hineinragen und die nicht oder nur schwer von einem Fahrersitz aus einsehbar sind, bedürfen einer elektronischen Überwachung mithilfe einer Kameraeinrichtung. Solch eine Überwachung ist jedoch besonders rechenintensiv, insbesondere wenn diese einen oder mehrere Sicherheitsstandards erfüllen soll oder muss.

Es ist daher eine Aufgabe der vorliegenden Erfindung, ein verbessertes Verfahren und eine verbesserte Vorrichtung zur Erfassung eines Bildes im Außenraum eines Kraftfahrzeugs anzugeben.

Diese Aufgabe wird gelöst durch den Gegenstand der unabhängigen Ansprüche. Vorteilhafte Weiterbildungen sind in den abhängigen Ansprüchen angegeben.

Gemäß einem ersten Aspekt wird ein Verfahren zur Erfassung eines Bildes im Außenraum eines Kraftfahrzeugs bereitgestellt.

Das erfindungsgemäße Verfahren umfasst dabei die Schritte Erfassen eines Bildes im Außenraum eines Kraftfahrzeugs mithilfe einer Kameraeinrichtung, wobei das erfasste Bild aufgrund der Art der Kameraeinrichtung verzerrt ist, Erfassen einer Eigenschaft der Kameraeinrichtung, Entzerren des Bildes basierend auf der Eigenschaft der Kameraeinrichtung, Überprüfen des entzerrten Bildes basierend auf der Eigenschaft der Kameraeinrichtung und Bereitstellen des entzerrten Bildes an einen Nutzer des Kraftfahrzeugs.

Das erfindungsgemäße Verfahren dient insbesondere dazu, eine einfache und kostengünstige Möglichkeit bereitzustellen, wie eine Entzerrung eines Kamerabildes auf Korrektheit und Funktionalität überprüft werden kann.

Insbesondere wird durch Ausführungsformen des erfindungsgemäßen Verfahrens ermöglicht, eine Anbauposition einer Kameraeinrichtung, insbesondere deren Ausrichtung und/oder Lage bzw. Koordinatensystem, insbesondere zum Umfeld der Kameraeinrichtung, zu erkennen bzw. zu verifizieren und dadurch eine fälschlich erfolgte Anbringung, insbesondere eine Verkippung, Verschiebung, Verdrehung und/oder Rotation der Kamera und/oder einer Halterung der Kameraeinrichtung zu ermitteln und zu korrigieren.

Bei dem Kraftfahrzeug handelt es sich insbesondere um ein Fahrzeug mit übergroßen Außendimensionen, wie beispielsweise ein Transport- und/oder Landwirtschaftsfahrzeug, das insbesondere auch Anbauteile und/oder Gerätschaften, wie einen Anhänger, eine Schaufel, eine Gabel, eine Mulde und/oder eine Mähvorrichtung, insbesondere einen Kreiselmäher, umfasst.

Dazu wird zumindest ein Bild im Außenraum des Kraftfahrzeugs mithilfe einer Kameraeinrichtung erfasst. Eine Kameraeinrichtung ist eine Vorrichtung, die ausgebildet ist, ein oder mehrere, insbesondere zusammenhängende, Bilder von dem Außenraum des Kraftfahrzeugs aufzunehmen. Insbesondere ist die Kameraeinrichtung ausgebildet, kontinuierlich und/oder periodisch Bilder vom Außenraum aufzunehmen, beispielsweise in einem Video bzw. Videostream.

Dazu kann die Kameraeinrichtung, die auch als Kamera oder Bilderfassungseinrichtung bezeichnet werden kann, insbesondere an oder in der Nähe einer Außenseite des Kraftfahrzeugs angeordnet bzw. befestigt sein. Dabei kann die Kameraeinrichtung sowohl dauerhaft bzw. ortsfest an dem Kraftfahrzeug angeordnet sein als auch lösbar bzw. entfernbar ausgebildet sein.

Beispielsweise kann die Kamera in einer oder mehreren Befestigungseinrichtungen wie Halterungen oder Aufnahmen an der Außenseite des Kraftfahrzeugs positionierbar bzw. anordnenbar sein, insbesondere an oder in der Nähe eines Anbauteils des Kraftfahrzeug und somit anlass- bzw. bedarfsbezogen.

Bei der Kameraeinrichtung handelt es sich insbesondere um eine Kamera mit einer besonderen Linse bzw. einem besonderen Objektiv, das eine nichtproportionale Abbildung erzeugt, wie beispielsweise ein sogenanntes Weitwinkel- und/oder Fischaugenobjektiv, das einen Öffnungs- bzw. Bildwinkel von mindestens 180°, 200°, 220°, 240°, 260°, 280° oder mehr aufweisen kann. Dadurch ist das von der Kameraeinrichtung erfasste Bild verzerrt und/oder verzeichnet, insbesondere zumindest abschnittsweise gekrümmt und/oder tonnenförmig und/oder fischaugenförmig verzeichnet.

In einem weiteren Schritt wird zumindest eine Eigenschaft der Kameraeinrichtung erfasst.

Eine Eigenschaft kann auch als Kontext der Kameraeinrichtung bezeichnet werden und charakterisiert bzw. definiert eine oder mehrere Parameter der Kameraeinrichtung, wie beispielsweise Typ bzw. Art, Ort und/oder erfassbarer Bildausschnitt bzw. -winkel der Kamera bzw. des verwendeten Objektivs, wie dies im weiteren Verlauf noch beschrieben wird. Insbesondere umfasst die Eigenschaft einen Hinweis oder eine Zuordnung zu einer Art und/oder Stärke einer Verzerrung des aufgenommenen Bildes und/oder eine Ausrichtung, Verkippung, Verschiebung, Verdrehung und/oder Rotation der Kameraeinrichtung.

Das Erfassen der Eigenschaft kann dabei insbesondere durch eine Kommunikation der Kameraeinrichtung mit einer Steuereinrichtung erfolgen, welche insbesondere diesen und die im weiteren Verlauf beschriebenen Schritte des Verfahrens durchführt und auch die Erfassung eines oder mehrere Bilder durch die Kameraeinrichtung bewirken bzw. auslösen kann.

Beispielsweise kann die Kamera ihre eigenen Parameter und insbesondere des verbauten Objektivs an die Steuereinrichtung bereitstellen. Darüber hinaus können geeignete Sensoren einen Ort der Kamera erfassen, wie Nahbereichssensoren, insbesondere NFC- und/oder RFID-Sensoren, die an oder in einer Halterung verbaut sind und mit der Steuereinrichtung kommunizieren.

Alternativ oder zusätzlich kann auch durch die Kameraeinrichtung ein in oder an der Halterung oder in der Nähe dazu angeordneter Code, wie beispielsweise ein Strich- oder QR-Code, ausgelesen werden, der einen Hinweis auf den Ort der Kameraeinrichtung ermöglicht. Dabei können die Kameraeinrichtung und die Steuereinrichtung sowohl drahtgebunden als auch drahtlos miteinander kommunizieren und die Eigenschaften der Kameraeinrichtung bereitstellen.

Ebenso kann die Eigenschaft auch durch die Kameraeinrichtung bzw. die Steuereinrichtung selbst erfasst werden, beispielsweise weil das Bild bzw. der erfasste Bildausschnitt analysiert wird und so Rückschlüsse auf eine Position und/oder einen Anbauort der Kameraeinrichtung geschlossen werden.

Dabei kann der Schritt der Erfassung der Eigenschaft vor, während oder nach dem Erfassen des bzw. der Bilder erfolgen. Insbesondere erfolgt dieser Schritt initial, d. h. bevor das erste Bild durch die Kameraeinrichtung erfasst wird.

Optional kann ein Bildausschnitt aus dem erfassten Bild ausgewählt werden, der nur einen Teilbereich bzw. eine Teilmenge des erfassten Bildes umfasst, beispielsweise einen bestimmten Öffnungswinkel, insbesondere einen bestimmten horizontalen und/oder vertikalen Öffnungswinkel von dem gesamt möglichen Öffnungswinkel. Beispielsweise wird lediglich ein horizontaler Öffnungswinkel von 30° und ein vertikaler Öffnungswinkel von 20° ausgewählt. Dies kann beispielsweise durch Ausschneiden und/oder Freistellen erfolgen. Der Bildausschnitt kann dabei insbesondere auch Aufgrund der Eigenschaft der Kameraeinrichtung ausgewählt werden.

Es wird das Bild bzw. der Bildausschnitt basierend auf der erfassten Eigenschaft der Kameraeinrichtung entzerrt.

Dabei wird das erfasste und aufgrund der Kameraeigenschaft verzerrte Bild entzerrt und zwar insbesondere dergestalt, dass sich ein zuvor verzerrtes oder verzeichnetes, insbesondere stark tonnenverzerrtes und/oder fischaugenförmig verzerrtes Bild, wie es von der Kameraeinrichtung erfasst wird, auf ein unverzerrtes bzw. verzeichnungsfreies, insbesondere ein gnomonisches, rectilineares, orthografisches und/oder winkelakkurates Bild abgebildet wird. Dazu werden mithilfe von Bildbearbeitungsalgorithmen die Bildpunkte bzw. Pixel derart bearbeitet, arrangiert und angeordnet, dass ein entzerrtes Bild entsteht.

Wie genau das verzerrte Bild entzerrt wird, kann insbesondere durch Zugriff der Steuereinrichtung auf eine Datenbank erfolgen, in der ein oder mehrere Anweisungen zur Entzerrung basierend auf der jeweiligen Kameraeigenschaft hinterlegt sind. Beispielsweise sind in dieser Datenbank zu mehreren Kameratypen, Objektivtypen und/oder Anbauorten vordefinierten Entzerrungsroutinen oder -anweisungen hinterlegt, auf denen basierend dann das Bild entzerrt werden kann.

Dabei kann die Datenbank sowohl an bzw. in der Kameraeinrichtung als auch an bzw. in der Steuereinrichtung angeordnet bzw. hinterlegt sein. Alternativ oder zusätzlich kann die Datenbank auch an einer entfernen Recheneinheit hinterlegt sein, von welcher sie im Bedarfsfall drahtlos abgerufen werden kann.

Optional kann, nachdem die Eigenschaft der Kamera identifiziert wurde, diese an einen Nutzer, insbesondere einen Fahrer, des Kraftfahrzeugs bereitgestellt werden, insbesondere zur Verifikation der erfassten Eigenschaft. Dies kann beispielsweise auf einer Ausgabeeinrichtung, wie einer Anzeigeeinrichtung, beispielsweise einem Monitor oder Display, bereitgestellt werden, die insbesondere im Innenraum des Kraftfahrzeugs angeordnet ist und von einem Fahrersitz aus im Betrieb des Kraftfahrzeugs einsehbar ist. Zusammen mit der Eigenschaft der Kamera kann auch eine Eigenschaft eines Anbauteils, welches zumindest teilweise in dem erfassten Bild erscheint, bereitgestellt werden.

Dabei wird das entzerrte Bild basierend auf der Eigenschaft der Kameraeinrichtung überprüft.

Eine Überprüfung kann dabei insbesondere mithilfe geeigneter Bildauswertungsalgorithmen, wie beispielsweise Bildvergleichsalgorithmen, erfolgen. Dabei wird geprüft, ob einzelne oder mehrere Elemente in dem Bild vordefinierten Elementen entsprechen, wie dies im weiteren Verlauf noch erläutert wird. Insbesondere wird überprüft, ob die Entzerrung ordnungsgemäß bzw. korrekt erfolgt ist und keine Fehler bei der Entzerrung aufgetreten sind. Dies kann basierend auf in den Eigenschaften der Kameraeirichtung festgelegten Kriterien erfolgen.

Es wird das entzerrte Bild an einen Nutzer des Kraftfahrzeugs bereitgestellt.

Es wird somit das entzerrte Bild an einen Nutzer ausgegeben. Insbesondere wird das entzerrte Bild nur an einen Nutzer bereitgestellt, wenn die Überprüfung positiv verläuft bzw. wenn die Entzerrung als korrekt identifiziert wird. Alternativ kann das Bild auch dann bereitgestellt werden, wenn die Überprüfung negativ verläuft bzw. die Entzerrung als fehlerbehaftet oder falsch identifiziert wird, wobei in diesem Fall optional ein Hinweis auf die negative Überprüfung bzw. den Fehler und insbesondere dessen Grad bereitgestellt werden kann. Die Ausgabe kann dabei beispielsweise auf einer Ausgabeeinrichtung, wie zuvor beschrieben, bereitgestellt werden.

Durch die erfindungsgemäße Lösung wird es ermöglicht, eine einfache und schnelle Möglichkeit bereitzustellen, einen Entzerrungsprozess bzw. -algorithmus zu verifizieren bzw. zu überprüfen.

Gemäß einer Weiterbildung umfasst das Verfahren weiter den Schritt Freigeben einer Funktion des Kraftfahrzeugs in Abhängigkeit von der Überprüfung.

Wenn die Überprüfung ergibt, dass die Entzerrung ordnungsgemäß bzw. korrekt verlaufen ist, kann dann eine Funktion des Kraftfahrzeugs freigegeben werden. Wenn hingegen die Überprüfung ergibt, dass die Entzerrung nicht ordnungsgemäß bzw. korrekt verlaufen ist, beispielsweise weil Abweichungen oder Veränderungen in dem entzerrten Bild gegenüber den Eigenschaften erkannt wurden, kann eine Funktion des Kraftfahrzeugs nicht freigegeben, gesperrt oder eingeschränkt werden. Insbesondere kann dies auch zusammen mit einer bereitgestellten Information erfolgen.

Bei der Funktion kann es sich insbesondere um eine Funktion des Kraftfahrzeugs handeln, die von einem Element ausgeführt wird, das zumindest teilweise im Blickfeld bzw. dem Bildausschnitt angeordnet ist, welches das Bild der Kameraeinrichtung wiedergibt.

Insbesondere handelt es sich bei der Funktion um eine Funktion in Bezug auf ein Anbauteil und/oder eine Gerätschaft, wie einen Anhänger, eine Schaufel, eine Gabel, eine Mulde und/oder eine Mähvorrichtung, weiter insbesondere eines solchen Elements, das derart an dem Kraftfahrzeug angeordnet ist, dass es von dem Fahrersitz nicht oder zumindest nicht vollständig einsehbar bzw. überblickbar ist.

Beispielsweise handelt es sich um eine Schaufel, Gabel, Mulde oder Mähvorrichtung, die weit vor das Kraftfahrzeug nach vorne herausragt und insbesondere in engeren und/oder schlecht einsehbaren Kreuzungen in die kreuzende Straße hineinragt.

Wieder beispielsweise handelt es sich um einen Anhänger, dessen hinteres Ende, insbesondere bei einer Rückwärtsfahrt, nicht so weit von dem Fahrer übersehen werden kann, dass er eine Fahrt sicher antreten oder fortsetzen kann.

Diese Funktion kann dann, sollte der Nutzer bzw. Fahrer das bereitgestellte Bild mit seiner Nutzereingabe falsifizieren, also nicht freigeben, gesperrt werden. Beispielsweise kann eine Betätigung des Anbauteils eingeschränkt oder verhindert werden oder eine Vorwärts- und/oder Rückwärtsfahrt, also ein Fahrtbeginn als solches verhindert oder nur mit eingeschränkter Geschwindigkeit, beispielsweise Schrittgeschwindigkeit, insbesondere weniger als 30 km/h, 10 km/h, 5 km/h oder 3 km/h, ermöglicht werden.

Durch diese Weiterbildung wird es ermöglicht, den Betrieb des Kraftfahrzeugs, insbesondere mit einem Anbauteil, besonders sicher zu gestalten.

Gemäß einer Weitebildung umfasst das Überprüfen ein Überprüfen von Bildmerkmalen.

Ein Bildmerkmal umfasst dabei beispielsweise ein Element, das in dem Bild erfasst bzw. abgebildet ist. Dabei können einzelne oder alle Bildmerkmale aus dem Bild extrahiert werden, beispielsweise durch geeignete Bilderkennungsalgorithmen, insbesondere aus dem Bereich der Mustererkennung.

Diese Merkmale können dann mit in den Kameraeigenschaften hinterlegten bzw. definierten Merkmalen, insbesondere aus der Datenbank, verglichen werden. Beispielsweise sollten ein oder mehrere Merkmale in dem Bild eine vordefinierte Form, Größe und/oder Position in dem Bild aufweisen, welche dann durch die Überprüfung auf Korrektheit getestet werden können.

Insbesondere kann die Überprüfung auf eine oder mehrere charakteristische Konturen in dem Bild erfolgen. Eine charakteristische Kontur in dem Bild ist insbesondere eine Linie und/oder Kante einer Komponente des Kraftfahrzeugs, wie beispielsweise ein Karosserieteil, insbesondere ein Kotflügel, eine Motorhaube, eine Heckabdeckung, eine Säule, insbesondere eine A-, B- und/oder eine C-Säule und/oder ein Dach, die eine eindeutige Linienführung aufweist.

Dabei werden eine oder mehrere solcher charakteristischer Konturen auf deren korrekte Position in dem Bild überprüft. Insbesondere wird überprüft, ob eine Linie und/oder Fläche mit einer vordefinierten Linie und/oder Fläche zusammenfällt, insbesondere in einem zuvor beschriebenen Überlagerungsbild. Insbesondere ist die Überprüfung derart ausgebildet, dass sie eine oder mehrere solcher charakteristischer Konturen mit einer Toleranz von weniger als 5 Pixeln, 3 Pixeln, 2 Pixeln, 1 Pixel und/oder pixelgenau bzw. pixelakkurat überprüft.

Durch diese Weiterbildung wird eine besonders einfache und schnelle Überprüfung ermöglicht.

Gemäß einer Weiterbildung erfolgt das Überprüfen in einem funktional sicheren Bereich.

Ein funktional sicherer Bereich betrifft dabei eine Hard- und/oder Software, die in dem Kraftfahrzeug verwendet wird, und die beispielsweise gemäß einer Norm und/oder Zertifizierung als besonders funktionssicher geprüft worden ist. Beispielsweise handelt es sich bei dem funktional sicheren Bereich um einen Bereich, der nach dem ASIL-Standard zertifiziert ist, insbesondere nach ASIL-A und/oder ASIL-B.

Insbesondere erfolgt ausschließlich die Überprüfung in einem funktional sicheren Bereich, wohingegen weitere Schritte, insbesondere die Entzerrung, des erfindungsgemäßen Verfahrens nicht in einem funktional sicheren Bereich, also mit herkömmlicher Hard- bzw. Software bearbeitet bzw. durchgeführt werden.

Weiter insbesondere erfolgt ausschließlich das Überprüfen von Bildmerkmalen im funktional sicheren Bereich. Insbesondere erfolgt das Erkennen bzw. Extrahieren der Merkmale aus dem erfassten Bild nicht im funktional sicheren Bereich.

Durch diese Weiterbildung wird eine besonders sichere Durchführung des Verfahrens ermöglicht.

Gemäß einer Weiterbildung erfolgt das Überprüfen mithilfe einer künstlichen Intelligenz.

Eine künstliche Intelligenz ist dabei eine computergestützte Funktionsapproximation, die das Überprüfen durchführt oder zumindest unterstützt. Dabei kann es sich insbesondere um ein künstliches neuronales Netz (KNN) handeln.

Insbesondere wurde die künstliche Intelligenz speziell für die Überprüfung bzw. den Merkmalsvergleich trainiert. Dies kann insbesondere mithilfe sogenannter Überlagerungsbilder erfolgen, in denen einzelne Elemente bzw. Merkmale, insbesondere farblich, hervorgehoben sind, mithilfe von tatsächlichen, reellen Bildern, die dem zu überprüfenden Bild entsprechen und/oder mithilfe von CAD-Daten. Diese Überlagerungsbilder können dabei entweder auf das entzerrte Bild von der Kameraeinrichtung gelegt werden oder alternativ, zunächst vorverzerrt werden, auf das verzerrte Bild der Kameraeinrichtung gelegt werden und dann gemeinsam entzerrt werden. Alternativ oder zusätzlich kann die künstliche Intelligenz auch mit realen Bildern und insbesondere einer tatsächlichen Anordnung der Kameraeinrichtung und/oder dem Anbauteil an dem Kraftfahrzeug erfolgen.

Durch diese Weiterbildung wird eine besonders zuverlässige Überprüfung ermöglicht.

Gemäß einer Weiterbildung umfasst die Kameraeigenschaft ein Modell der Kameraeinrichtung.

Ein Modell der Kameraeinrichtung umfasst insbesondere eine Eigenschaft, Art und/oder Beschaffenheit einer oder mehrerer Komponenten der Kameraeinrichtung, insbesondere des Sensors und/oder des Objektivs bzw. der Linse, wie beispielsweise ein Hersteller, Typ, Produktionsmodell und/oder - zeitraum.

Insbesondere umfasst das Modell der Kameraeinrichtung eine Brennweite und/oder einen Öffnungswinkel des Objektivs bzw. der Linse.

Das Modell der Kameraeinrichtung kann auch Daten bzw. Informationen zum Gehäuse und/oder einer Befestigungseinrichtung der Kameraeinrichtung umfassen, insbesondere Daten aus eine Simulation und/oder einer Produktion, beispielsweise sogenannte CAD-Daten, also Daten, die von einem computergestützen Entwurf stammen und die im Wesentlichen mit den tatsächlichen Werten und insbesondere Abmessungen der Kameraeinrichtung und/oder der Befestigungseinrichtung übereinstimmen.

Ebenso insbesondere umfasst das Modell eine Auflösung, ein Format, ein Seitenverhältnis und/oder ein möglicher Bildausschnitt des Sensors.

Durch diese Weiterbildung ist es möglich, die Entzerrung und Überprüfung besonders genau durchzuführen.

Gemäß einer Weiterbildung umfasst die Kameraeigenschaft einen erfassten Bildausschnitt.

Insbesondere umfasst die Kameraeigenschaft eine Größe, ein Aspektverhältnis, eine Pixelzahl und/oder -auflösung und/oder ein Farbraum des erfassten Bildes. Beispielsweise enthält die Kameraeigenschaft Informationen zu dem Bildausschnitt, welche genutzt werden, um das Bild zu entzerren und zu überprüfen.

Durch diese Weiterbildung ist es möglich, die Entzerrung und Überprüfung besonders genau durchzuführen.

Gemäß einer Weiterbildung umfasst die Kameraeigenschaft ein in dem Bild erfasstes Element.

Dabei kann es sich bei dem Element insbesondere um ein Element des Kraftfahrzeugs und/oder des Anbauteils des Kraftfahrzeugs handeln. Beispielsweise kann es sich bei dem Element um ein Karosserieteil, wie beispielsweise ein oder mehrere Kotflügel, ein oder mehrere Säulen, ein oder mehrere Räder und/oder ein oder mehrere Verkleidungsteile handeln. Ebenso beispielsweise handelt es sich bei dem Element um einen Hydraulikzylinder oder ein anderes Element oder eine andere Komponente eines Anbauteils.

Durch diese Weiterbildung ist es möglich, die Entzerrung und Überprüfung besonders genau durchzuführen.

Zum Durchführen der beschriebenen Schritte kann eine Prozessorschaltung bereitgestellt sein, die eine Programmierung oder Software aufweist, die Programminstruktionen umfasst, welche die Prozessorschaltung bei Ausführen der Programminstruktionen dazu veranlasst, eine Ausführungsform des Verfahren durchzuführen. Die Prozessorschaltung kann hierzu zumindest einen Mikroprozessor und/oder Mikrocontroller aufweisen. Die Programminstruktionen können in einem Datenspeicher der Prozessorschaltung gespeichert sein.

Gemäß einem weiteren Aspekt wird eine Vorrichtung angegeben, die ausgebildet ist, eine der zuvor beschriebenen Ausführungsformen des erfindungsgemäßen Verfahrens durchzuführen.

Die Vorrichtung kann dabei eine oder mehrere Kameraeinrichtungen umfassen und/oder Zugriff darauf haben. Die Vorrichtung kann auch eine Steuereinrichtung umfassen sowie eine Prozessorschaltung, wie bereits zuvor beschrieben.

Gemäß einem weiteren Aspekt wird ein Kraftfahrzeug mit einer solchen Vorrichtung angegeben.

Zu der Erfindung gehören auch Weiterbildungen der erfindungsgemäßen Vorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtung und des erfindungsgemäßen Kraftfahrzugs hier nicht noch einmal beschrieben.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
Fig. 1 eine schematische Draufsicht einer Ausführungsform einer Vorrichtung zur Erfassung eines Bildes im Außenraum eines Kraftfahrzeugs sowie ein Kraftfahrzeug;
Fig. 2 eine Detailansicht aus Fig. 1;
Fig. 3 ein schematisches Ablaufdiagramm einer Ausführungsform einer Vorrichtung und eines Verfahrens zur Erfassung eines Bildes im Außenraum eines Kraftfahrzeugs; und
Fig. 4 ein schematisches Ablaufdiagramm einer alternativen Ausführungsform einer Vorrichtung und eines Verfahrens zur Erfassung eines Bildes im Außenraum eines Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

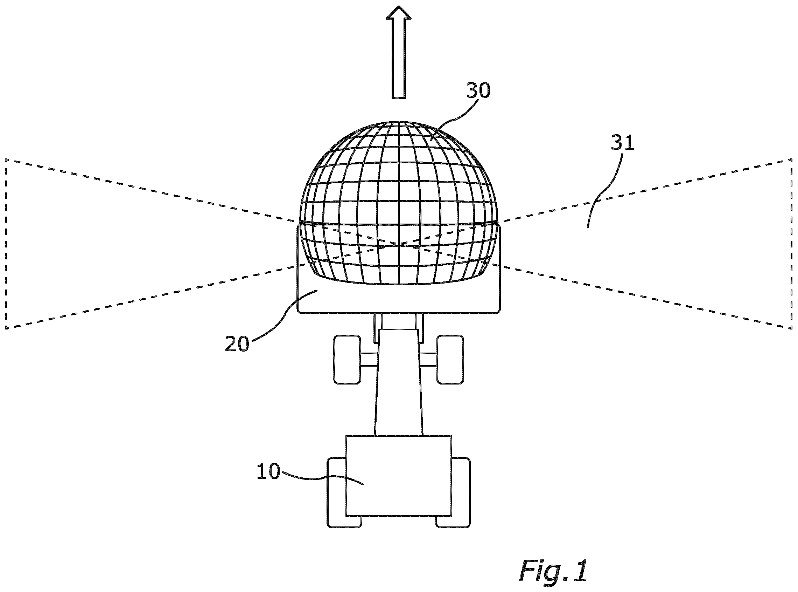

Fig. 1 zeigt eine schematische Draufsicht einer Ausführungsform einer Vorrichtung zur Erfassung eines Bildes im Außenraum eines Kraftfahrzeugs sowie ein Kraftfahrzeug 10.

Das Kraftfahrzeug 10 bewegt sich entlang einer Fahrtrichtung, die durch einen Pfeil angezeigt wird und umfasst ein Anbauteil 20 bzw. eine Anbauvorrichtung, die hier beispielhaft als Mähvorrichtung abgebildet ist. Das Anbauteil bzw. die Anbauvorrichtung ist hier beispielhaft ein Frontanbauteil bzw. eine Frontanbauvorrichtung.

Das Kraftfahrzeug 10 umfasst auch eine Kameraeinrichtung, die in dieser Fig. 1 aus Gründen der Übersichtlichkeit nicht abgebildet ist. Diese Kameraeinrichtung erfasst dabei einen Erfassungsbereich 30, der nahezu sphärisch ausgebildet ist und einen Erfassungswinkel - sowohl horizontal als auch vertikal - von 220° aufweist.

Dabei sind in dieser gezeigten Ausführungsform insbesondere die durch Bezugszeichen "31" angezeigten Ausschnitte relevant, da sie einen wichtigen Teil des Anbauteils 20 erfassen. Diese Ausschnitte sind dabei aufgrund des Erfassungsbereichs bzw. -winkels der Kameraeinrichtung noch sphärisch verzerrt.

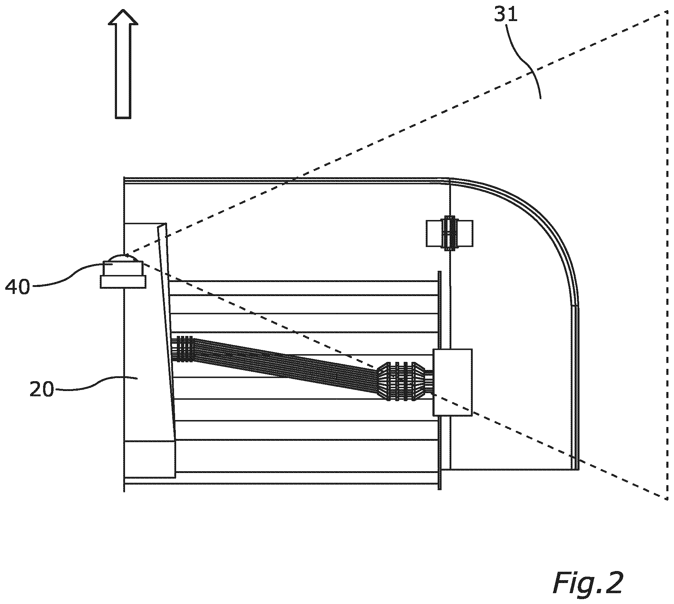

Fig. 2 zeigt eine Detailansicht aus Fig. 1.

Dabei ist in dieser Fig. 2 die Kameraeinrichtung 40 beispielhaft mit einem Fischaugenobjektiv gezeigt, die einen rechten Teil des Anbauteils in einem Ausschnitt 31 erfasst.

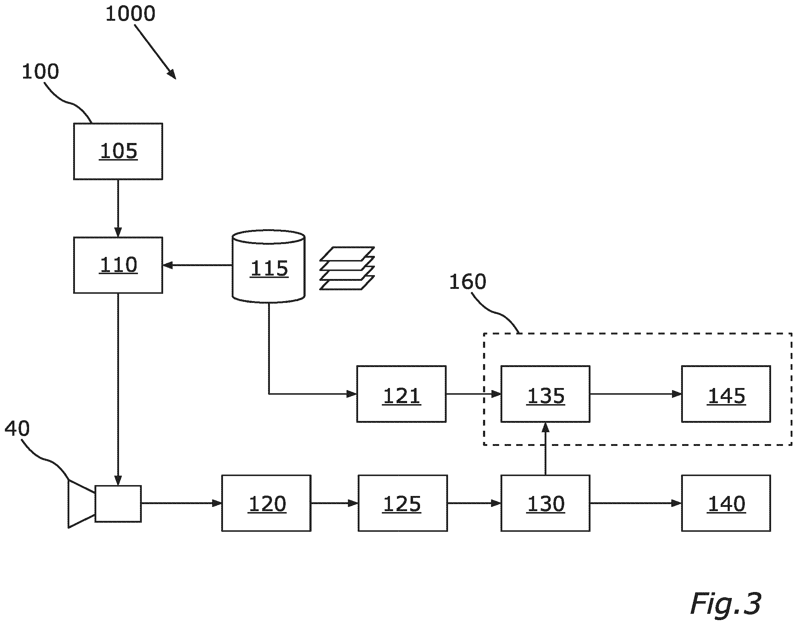

Fig. 3 zeigt ein schematisches Ablaufdiagramm einer Ausführungsform einer Vorrichtung 1000 und eines Verfahrens 100 zur Erfassung eines Bildes im Außenraum eines Kraftfahrzeugs.

Die Vorrichtung 1000 führt dabei das im Folgenden beschriebene Verfahren bzw. dessen Schritte aus.

Das erfindungsgemäße Verfahren 100 beginnt mit dem Schritt 105, in dem eine oder mehrere Eigenschaften bzw. ein Kontext einer Kameraeinrichtung 40 ermittelt wird.

In einem weiteren Schritt 110 wird die Kameraeinrichtung 40 basierend auf den ermittelten Eigenschaften konfiguriert. Dies erfolgt durch Zugriff auf einen Speicher bzw. eine Datenbank 115, in der Informationen zur Kameraeinrichtung 40 hinterlegt sind.

Es wird sodann ein oder mehrere Bilder bzw. ein Video umfassend mehrere aufeinander folgende Bilder mithilfe der Kameraeinrichtung 40 von dem Außenraum des Kraftfahrzeugs im Schritt 120 erfasst. Die Bilder sind dabei aufgrund der Eigenschaft der Kameraeinrichtung verzerrt.

Es erfolgt dann eine Entzerrung des erfassten Bildes in Schritt 125 mithilfe eines geeigneten Bildentzerrungsalgorithmus und basierend auf den Kameraeigenschaften, was in dem entzerrten Bild in Schritt 130 resultiert.

Im Schritt 135 werden Merkmale in dem entzerrten Bild basierend auf den Merkmalen 121, die aus der Datenbank basierend auf den Kamerainformationen bereitgestellt werden, erkannt.

Im Schritt 145 erfolgt dann die Überprüfung der identifizierten Merkmale.

Dabei erfolgen in dieser Ausführungsform sowohl die Merkmalserkennung als auch die Überprüfung in einem funktional sicheren Bereich 160.

Wenn die Überprüfung dann positiv verläuft, also die Entzerrung als korrekt beurteilt wird, wird das entzerrte Bild in Schritt 140 an einer Anzeigeeinrichtung einem Nutzer des Kraftfahrzeugs angezeigt. Optional kann in diesem Schritt 140 auch die Freigabe einer Funktion des Kraftfahrzeugs erfolgen, ebenso in Abhängigkeit der Überprüfung.

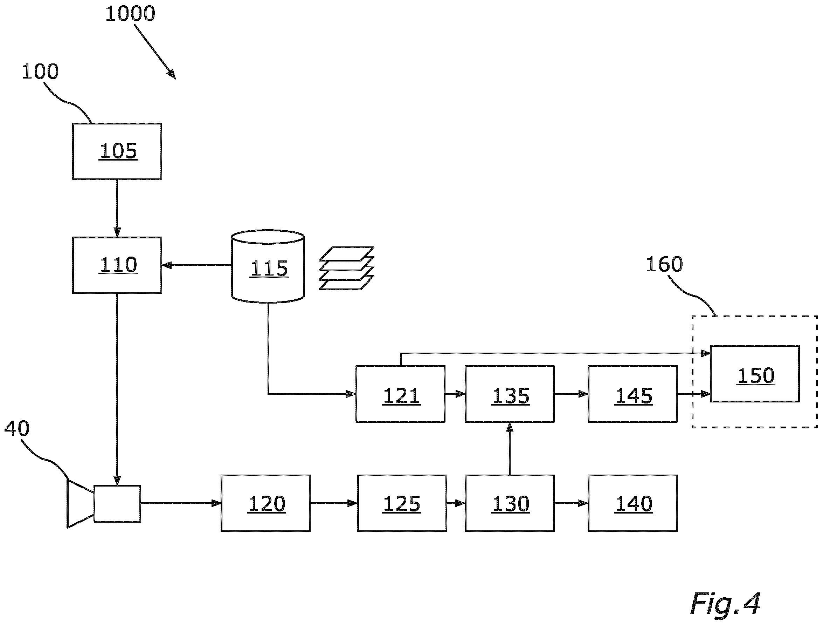

Fig. 4 zeigt ein schematisches Ablaufdiagramm einer alternativen Ausführungsform einer Vorrichtung 1000 und eines Verfahrens 100 zur Erfassung eines Bildes im Außenraum eines Kraftfahrzeugs.

Diese Ausführungsform unterscheidet sich von der in Fig. 3 gezeigten Ausführungsform insbesondere dadurch, dass nur ein Teilbereich der Funktionen aus Fig. 3 in dem funktional sicheren Bereich erfüllt werden.

Das erfindungsgemäße Verfahren 100 beginnt mit dem Schritt 105, in den eine oder mehrere Eigenschaften bzw. ein Kontext einer Kameraeinrichtung 40 ermittelt wird.

In einem weiteren Schritt 110 wird die Kameraeinrichtung 40 basierend auf den ermittelten Eigenschaften konfiguriert. Dies erfolgt durch Zugriff auf einen Speicher bzw. eine Datenbank 115, in der Informationen zur Kameraeinrichtung 40 hinterlegt sind.

Es wird sodann ein Bild bzw. ein Video umfassend mehrere aufeinander folgende Bilder mithilfe der Kameraeinrichtung 40 von dem Außenraum des Kraftfahrzeugs im Schritt 120 erfasst. Die Bilder sind dabei aufgrund der Eigenschaft der Kameraeinrichtung verzerrt.

Es erfolgt dann eine Entzerrung des erfassten Bildes in Schritt 125 mithilfe eines geeigneten Bildentzerrungsalgorithmus und basierend auf den Kameraeigenschaften, was in dem entzerrten Bild in Schritt 130 resultiert.

Im Schritt 135 werden Merkmale in dem entzerrten Bild basierend auf den Merkmalen 121, die aus der Datenbank basierend auf den Kamerainformationen bereitgestellt werden, erkannt.

Diese erkannten Merkmale werden dann im Schritt 145 extrahiert bzw. isoliert.

Im Schritt 150 werden diese isolierten Merkmale dann basierend auf den abgerufenen Merkmalen 121 verglichen und überprüft.

Dabei erfolgt lediglich der Schritt des Überprüfens 150 in einem funktional sicheren Bereich 160.

Wenn die Überprüfung dann positiv verläuft, also die Entzerrung als korrekt beurteilt wird, wird das entzerrte Bild in Schritt 140 an einer Anzeigeeinrichtung einem Nutzer des Kraftfahrzeugs angezeigt. Optional kann in diesem Schritt 140 auch die Freigabe einer Funktion des Kraftfahrzeugs erfolgen, ebenso in Abhängigkeit der Überprüfung.

Insgesamt zeigt das Beispiel, wie ein Verfahren zur kostengünstigen Realisierung eines funktional sicheren Betriebes einer Kameraeinrichtung an einem Kraftfahrzeug bereitgestellt werden kann.

### Bezugszeichenliste

- 10: Kraftfahrzeug
- 20: Anbauteil
- 30: Erfassungsbereich
- 31: Ausschnitt
- 40: Kameraeinrichtung
- 100: Verfahren
- 105: Verfahrensschritt
- 110: Verfahrensschritt
- 115: Datenbank
- 120: Verfahrensschritt
- 121: Verfahrensschritt
- 125: Verfahrensschritt
- 130: Verfahrensschritt
- 135: Verfahrensschritt
- 140: Verfahrensschritt
- 145: Verfahrensschritt
- 150: Verfahrensschritt
- 155: Verfahrensschritt
- 160: funktional sicherer Bereich
- 1000: Vorrichtung

## Patentansprüche

1. Verfahren (100) zur Erfassung eines Bildes im Außenraum eines Kraftfahrzeugs (10), umfassend:
- Erfassen eines Bildes im Außenraum eines Kraftfahrzeugs (10) mithilfe einer Kameraeinrichtung (40), wobei das erfasste Bild aufgrund der Art der Kameraeinrichtung (40) verzerrt ist;
- Erfassen einer Eigenschaft der Kameraeinrichtung (40);
- Entzerren des Bildes basierend auf der Eigenschaft der Kameraeinrichtung (40);
- Überprüfen des entzerrten Bildes basierend auf der Eigenschaft der Kameraeinrichtung; und
- Bereitstellen des entzerrten Bildes an einen Nutzer des Kraftfahrzeugs (10).

2. Verfahren (100) nach Anspruch 1, weiter umfassend:
- Freigeben einer Funktion des Kraftfahrzeugs in Abhängigkeit von der Überprüfung.

3. Verfahren (100) nach einem der vorhergehenden Ansprüche,
wobei das Überprüfen ein Überprüfen von Bildmerkmalen umfasst.

4. Verfahren (100) nach einem der vorhergehenden Ansprüche,
wobei das Überprüfen in einem funktional sicheren Bereich (160) erfolgt.

5. Verfahren (100) nach einem der vorhergehenden Ansprüche,
wobei das Überprüfen mithilfe einer künstlichen Intelligenz erfolgt.

6. Verfahren (100) nach einem der vorhergehenden Ansprüche,
wobei die Kameraeigenschaft ein Modell der Kameraeinrichtung (40) umfasst.

7. Verfahren (100) nach einem der vorhergehenden Ansprüche,
wobei die Kameraeigenschaft einen erfassten Bildausschnitt umfasst.

8. Verfahren (100) nach einem der vorhergehenden Ansprüche,
wobei die Kameraeigenschaft ein in dem Bild erfasstes Element umfasst.

9. Vorrichtung (1000) zur Erfassung eines Bildes im Außenraum eines Kraftfahrzeugs (10), wobei die Vorrichtung (1000) ausgebildet ist, ein Verfahren (100) nach einem der vorhergehenden Ansprüche durchzuführen.

10. Kraftfahrzeug (10), umfassend eine Vorrichtung (1000) nach Anspruch 9.
